(19) Europäisches Patentamt
European Patent Office
Office européen des brevets

(11) **EP 4 101 982 B1**

(12) **EUROPÄISCHE PATENTSCHRIFT**

(45) Veröffentlichungstag und Bekanntmachung des Hinweises auf die Patenterteilung:
**19.11.2025 Patentblatt 2025/47**

(21) Anmeldenummer: **22174098.8**

(22) Anmeldetag: **18.05.2022**

(51) Internationale Patentklassifikation (IPC):
**E01C 23/088** *(2006.01)*     **B65G 41/00** *(2006.01)*

(52) Gemeinsame Patentklassifikation (CPC):
**E01C 23/088**

(54) **SELBSTFAHRENDE FRÄSMASCHINE MIT EINEM MASCHINENRAHMEN UND EINER FÖRDEREINRICHTUNG ZUM ABFÜHREN VON MATERIAL**

SELF-PROPELLED MILLING MACHINE WITH A MACHINE FRAME AND A CONVEYOR FOR REMOVING MATERIAL

MACHINE AUTOMOTRICE À FRAISER DOTÉE D'UN BÂTI DE MACHINE ET D'UN DISPOSITIF DE TRANSPORT PERMETTANT D'ÉVACUER LA MATIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2021 DE 102021114706**

(43) Veröffentlichungstag der Anmeldung:
**14.12.2022 Patentblatt 2022/50**

(73) Patentinhaber: **Wirtgen GmbH**
**53578 Windhagen (DE)**

(72) Erfinder:
• **von Schönebeck, Winfried**
**53560 Kalenborn (DE)**
• **Schwippert, Sascha**
**53639 Königswinter-Oelinghoven (DE)**

(74) Vertreter: **Oppermann, Frank**
**OANDO Oppermann & Oppermann**
**Thurn-und-Taxis-Platz 6**
**60313 Frankfurt am Main (DE)**

(56) Entgegenhaltungen:
**DE-A1- 1 784 753     DE-A1- 102016 015 482**
**US-A- 5 178 253**

## Beschreibung

Die Erfindung betrifft eine selbstfahrende Fräsmaschine, insbesondere eine Straßenfräsmaschine oder einen Surface-Miner, welche einen von Laufwerken getragenen höhenverstellbaren Maschinenrahmen, eine am Maschinenrahmen vorgesehene Arbeitseinrichtung zum Bearbeiten des Untergrunds, und eine Fördereinrichtung zum Abführen von Material aufweist.

Die bekannten selbstfahrenden Fräsmaschinen verfügen im Allgemeinen über einen Maschinenrahmen, der von einem Fahrwerk getragen wird, das mehrere Kettenlaufwerke aufweist. Es sind selbstfahrende Fräsmaschinen bekannt, die eine Arbeitseinrichtung zur Bearbeitung des Untergrunds, beispielsweise zum Abtragen schadhafter Straßenschichten (Straßenfräsmaschine) oder zum Abbau von Bodenschätzen (Surface-Miner) aufweisen. Die Arbeitseinrichtung der Straßenfräsmaschinen und Surface-Miner weist eine Fräswalze auf, die am Maschinenrahmen angeordnet ist. Den einzelnen Laufwerken der Straßenfräsmaschinen und Surface-Miner sind Hubeinrichtungen zugeordnet, die Kolben-/Zylinder-Anordnungen umfassen, um den Maschinenrahmen zusammen mit der Fräswalze gegenüber dem Untergrund (Bodenoberfläche) absenken, anheben oder neigen zu können.

Zum Abtransport des abgefrästen bzw. abgebauten Materials verfügen Straßenfräsmaschinen und Surface-Miner über eine Fördereinrichtung, die einen zu beiden Seiten schwenkbaren Ausleger mit einem endlos umlaufenden Förderband aufweist, so dass das schüttfähige Material (Schüttgut) während des Betriebs der Fräsmaschine auf der Ladefläche eines sich mit der Fräsmaschine mitbewegenden Transportfahrzeugs (LKW) abgeworfen werden kann. Der Ausleger einer Straßenfräsmaschine weist im Allgemeinen eine Konsole auf, die am Maschinenrahmen um eine im Wesentlichen senkrecht auf dem Maschinenrahmen stehende Drehachse schwenkbar gelagert ist. Zum Verschwenken des Auslegers ist eine Schwenkvorrichtung vorgesehen, die von einer Antriebseinheit angetrieben wird. Im Allgemeinen ist eine Bedieneinheit vorgesehen, an der die Stellung des Auslegers vom Maschinenführer eingestellt werden kann. Es sind aber auch Assistenzsysteme bekannt, die den Maschinenführer von dieser Aufgabe entlasten.

Die Winkelstellung des Auslegers sollte sich vom Maschinenführer leicht und präzise einstellen lassen und der Ausleger sollte einen ausreichend großen Schwenkbereich haben, um das Material sicher auf der Ladefläche des LKW abwerfen zu können.

Die WO 01/31301 A1 beschreibt eine Straßenfräsmaschine mit einer Fördereinrichtung, die einen schwenkbaren Ausleger aufweist. Die Schwenkvorrichtung umfasst eine Kolben-/Zylinderanordnung, deren Kolben gelenkig mit einer Konsole des Auslegers und deren Zylinder gelenkig mit dem Maschinenrahmen verbunden ist. Die Konsole wird durch Ein- und Ausfahren des Kolbens verschwenkt. Aus der WO 2014/029824 A1 ist eine Straßenfräsmaschine mit einer Schwenkvorrichtung für den Ausleger bekannt, die zwei Kolben-/Zylinderanordnungen aufweist, von denen die eine auf der einen Seite und die andere auf der anderen Seite der Längsmittelebene des Maschinerahmen angeordnet ist.

Die oben beschriebenen Schwenkvorrichtungen für Straßenfräsmaschinen haben zwar einen einfachen Aufbau. Nachteilig ist aber, dass das Drehmoment, das mit der Kolben-/Zylinderanordnung, die eine konstante Kraft ausübt, aufgebracht wird, nicht über den gesamten Schwenkbereich weitgehend konstant ist. Im Schwenkbereich minimaler Auslenkung ist das Drehmoment am größten und im Bereich maximaler Auslenkung am kleinsten. Aufgrund der hohen Drehmomente muss die Kolben-/Zylinderanordnung ausreichend dimensioniert sein, wodurch sich höhere Kosten, ein größeres Gewicht und ein größerer Platzbedarf ergeben.

Die US 5 178 253 A1 beschreibt eine Schwenkvorrichtung für eine Fräsmaschine, welche eine erste Kolben-/Zylinderanordnung auf der einen Seite und eine zweite Kolben-/Zylinderanordnung auf der anderen Seite der Längsmittelebene des Maschinerahmens aufweist, wobei der Zylinder der ersten und zweiten Kolben-/Zylinderanordnung mit dem Maschinenrahmen gelenkig verbunden sind. Der Kolben der beiden Kolben-/Zylinderanordnungen ist jeweils mit einem Ende eines Getriebegliedes gelenkig verbunden, dessen anderes Ende gelenkig mit dem Ausleger verbunden ist. Der Ausleger wird zu der einen Seite verschwenkt, wenn der Kolben der ersten Kolben-/Zylinderanordnung eingefahren wird, und der Ausleger wird zu der anderen Seite verschwenkt, wenn der Kolben der zweiten Kolben-/Zylinderanordnung eingefahren wird.

Beim Einfahren des Kolbens der einen Kolben-/Zylinderanordnung wird der Kolben der anderen Kolben-/Zylinderanordnung aus dem Zylinder gezogen. Folglich wird nur von einem der beiden Kolben-/Zylinderanordnungen eine Zugkraft ausgeübt. Da die eine Kolben-/Zylinderanordnung nicht von der anderen unterstützt wird, müssen die Kolben-/Zylinderanordnungen und die zugehörige Hydraulik ausreichend dimensioniert sein, um die erforderlichen Kräfte aufbringen zu können.

Der Erfindung liegt die Aufgabe zugrunde, die Schwenkvorrichtung einer Fördereinrichtung einer selbstfahrenden Fräsmaschine zu verbessern. Eine Aufgabe der Erfindung ist insbesondere die Bedienung der Schwenkvorrichtung zu vereinfachen, so dass die Stellung des Auslegers vom Maschinenführer leicht und präzise eingestellt werden kann.

Die Lösung dieser Aufgabe erfolgt erfindungsgemäß mit den Merkmalen des Patentanspruchs 1. Die Gegenstände der abhängigen Ansprüche betreffen besondere Ausführungsformen der Erfindung.

Die erfindungsgemäße selbstfahrende Fräsmaschine, insbesondere Straßenfräsmaschine oder Surface-Miner, verfügt über einen von Laufwerken getragenen Maschinenrahmen, eine am Maschinenrahmen vorgesehene Arbeitseinrichtung zum Bearbeiten des Untergrunds, und eine Fördereinrichtung zum Abführen von Material (Schüttgut), wobei die Fördereinrichtung einen Ausleger aufweist, der am Maschinenrahmen um eine im Wesentlichen senkrecht auf dem Maschinenrahmen stehende Drehachse schwenkbar gelagert ist.

In diesem Zusammenhang wird unter einem schwenkbaren Ausleger jedes auskragende Bauteil verstanden, das in einer zu der Längsmittelebene des Maschinenrahmens querverlaufenden Ebene, d. h. bei einer horizontalen Ausrichtung des Maschinerahmens horizontalen Ebene, um einen bestimmten Schwenkwinkel verschwenkt werden kann. Der Ausleger kann aber auch in einer dazu senkrecht stehenden vertikalen Ebene noch um einen bestimmten Kippwinkel schwenkbar sein.

Die Schwenkvorrichtung der erfindungsgemäßen Fräsmaschine umfasst mindestens ein Getriebe mit mehreren Getriebegliedern und der sie verbindenden Gelenke und mindestens einen Linearantrieb zum Antreiben mindestens einer der Getriebeglieder.

Das Getriebe der Schwenkvorrichtung erlaubt eine benutzerfreundliche Bedienung durch den Maschinenführer. Die Schwenkvorrichtung zeichnet sich dadurch aus, dass sich der Ausleger über den gesamten Schwenkbereich mit einer weitgehend gleichen Geschwindigkeit verschwenken lässt. Daher kann der Maschinenführer den Ausleger leicht und präzise einstellen. Mit dem Getriebe wird verhindert, dass eine Bewegung des Linearantriebs bei einer bestimmten Winkelstellung, beispielsweise bei einer maximalen oder minimalen Auslenkung, zu einer besonders schnellen Schwenkbewegung führt. Darüber hinaus kann mit der erfindungsgemäßen Schwenkvorrichtung über den gesamten Schwenkbereich auf den Ausleger immer ein weitgehend konstantes Drehmoment ausgeübt werden.

Unter einem Linearantrieb werden sämtliche Antriebsmittel verstanden, die zu einer translatorischen Bewegung führen. Zu diesen Antriebsmitteln zählen beispielsweise Kolben-/Zylinderanordnungen oder Gewindestangengetriebe.

Das Getriebe der Schwenkvorrichtung ist als ein ebenes viergliedriges Drehgelenkgetriebe ausgebildet, wobei der Maschinenrahmen ein Getriebeglied des Drehgelenkgetriebes bildet. Eine besonders bevorzugte Ausführungsform sieht vor, dass die Schwenkvorrichtung ein erstes viergliedriges Drehgelenkgetriebe und eine zweites viergliedriges Drehgelenkgetriebe aufweist, wobei das erste und zweite Drehgelenkgetriebe zu einer Längsmittelebene des Maschinenrahmens spiegelsymmetrisch angeordnet sind. Bei einer Ausführungsform mit zwei Drehgelenkgetrieben können die beiden Getriebe mindestens ein gemeinsames Getriebeglied und/oder Gelenk aufweisen.

Ein besonderer Vorteil der erfindungsgemäßen Schwenkvorrichtung liegt darin, dass der Linearantrieb zum Anrieb eines der Getriebeglieder in beide Richtungen wirken kann. Daher ist es möglich, dass die Schwenkvorrichtung nur ein viergliedriges Drehgelenkgetriebe umfassen kann, mit dem sich der Ausleger in beide Richtungen verschwenken lässt. Wenn die Fräsmaschine aber über zwei viergliedrige Drehgelenkgetriebe verfügt, können die beiden Antriebseinheiten aufgrund der gegenseitigen Unterstützung kleiner dimensioniert sein, wodurch Platz und Kosten eingespart werden.

Bei dem viergliedrige Drehgelenkgetriebe ist die Geschwindigkeit, mit der sich der Ausleger verschwenken lässt, über den gesamten Schwenkbereich relativ konstant. Daher kann der Ausleger in der Praxis vom Maschinenführer genau und sicher in die gewünschte Position geschwenkt werden, wodurch sich die Bedienbarkeit (Handling) der Fräsmaschine verbessert. Weiterhin erlaubt das viergliedrige Drehgelenkgetriebe einen relativ gleichmäßigen Drehmomentverlauf über den gesamten Schwenkbereich. Schließlich führt das viergliedrige Drehgelenkgetriebe zu einem vergrößerten Schwenkbereich.

Bei einer Ausführungsform umfasst das erste und/oder zweite viergliedrige Drehgelenkgetriebe ein erstes Getriebeglied, dessen eines Ende mit einem ersten Gelenk gelenkig an dem Maschinenrahmen fixiert ist und dessen anderes Ende mit einem zweiten Gelenk gelenkig mit einem Ende eines zweiten Getriebegliedes verbunden ist, dessen anderes Ende mit einem dritten Gelenk gelenkig mit einem Ende eines dritten Getriebegliedes verbunden ist, dessen anderes Ende mit einem vierten Gelenk gelenkig an dem Maschinerahmen fixiert ist.

Die Getriebeglieder und Gelenke können unterschiedlich ausgebildet sein. Beispielsweise können die Getriebeglieder von Stangen, Platten, Bändern oder Teilen des Maschinenrahmens und/oder des Auslegers gebildet werden. Die Gelenke können Bolzen und Buchsen aufweisen. Das erste Getriebeglied des ersten und/oder zweiten viergliedrigen Drehgelenkgetriebes kann von einer Stange und das zweite Getriebeglied des ersten und/oder zweiten viergliedrigen Drehgelenkgetriebes von zwei im Abstand zueinander angeordneten Stangen gebildet werden, wobei das eine Ende der Stange des ersten Getriebegliedes zwischen den Enden der beiden Stangen des zweiten Getriebegliedes drehbar gelagert ist. Es ist aber auch möglich, dass das erste Getriebeglied von zwei im Abstand zueinander angeordneten Stangen und das zweite Getriebeglied von einer Stange gebildet wird, wobei das eine Ende der Stange des zweiten Getriebegliedes zwischen den Enden der beiden Stangen des ersten Getriebegliedes drehbar gelagert ist.

Der Linearantrieb kann eine erste Kolben-/Zylinderanordnung aufweisen, deren Kolben an einem Ende gelenkig an dem Maschinenrahmen fixiert ist und deren Zylinder an einem Ende gelenkig mit einer der Getriebeglieder des ersten viergliedrigen Drehgelenkgetriebes verbunden ist, und/oder kann eine zweite Kolben-/Zylinderanordnung aufweist, deren Kolben an einem Ende gelenkig an dem Maschinenrahmen fixiert ist und deren Zylinder an einem Ende gelenkig mit einem der Getriebeglieder des zweiten viergliedrigen Drehgelenkgetriebes verbunden ist. Als Alternative kann der Linearantrieb eine erste Kolben-/Zylinderanordnung aufweisen, deren Zylinder an einem Ende gelenkig an dem Maschinenrahmen fixiert ist und deren Kolben an einem Ende gelenkig mit einem der Getriebeglieder des ersten viergliedrigen Drehgelenkgetriebes verbunden ist, und eine zweite Kolben-/Zylinderanordnung aufweisen, deren Zylinder an einem Ende gelenkig an dem Maschinenrahmen fixiert ist und deren Kolben an einem Ende gelenkig mit einem der Getriebeglieder des zweiten viergliedrigen Drehgelenkgetriebes verbunden ist.

Der Kolben bzw. Zylinder der ersten bzw. zweiten Kolben-/Zylinderanordnung kann an einem Ende mit dem zweiten Getriebeglied des ersten bzw. zweiten viergliedrigen Drehgelenkgetriebes gelenkig verbunden sein. Diese Verbindung erlaubt eine optimale Eintragung der Zug- bzw. Druckkräfte bei einer relativ geringen Baulänge der jeweiligen Kolben-/Zylinderanordnung. Der Kolben bzw. Zylinder kann aber auch mit dem ersten oder dritten Getriebeglied gelenkig verbunden sein.

Das zweite Getriebeglied kann einen Ansatz aufweisen, an dem der Kolben oder Zylinder der ersten bzw. zweiten Kolben-/Zylinderanordnung an einem Ende gelenkig mit dem zweiten Getriebeglied des ersten bzw. zweiten viergliedrigen Drehgelenkgetriebes verbunden ist. Die gelenkige Verbindung der Kolben-/Zylinderanordnung mit den Getriebegliedern kann aber auch direkt an einem Gelenk eines der Getriebeglieder erfolgen.

Der Ausleger kann eine Konsole und einen Rahmen umfassen, wobei die Konsole um eine zentrale horizontale Achse drehbar an dem Maschinenrahmen befestigt ist und der Rahmen um eine vertikale Achse schwenkbar in der Konsole gelagert ist. Der Rahmen des Auslegers kann beispielsweise einen Bandförderer aufnehmen. Derartige Ausleger gehören zum Stand der Technik.

Eine Ausführungsform sieht vor, dass das dritte Getriebeglied des ersten und zweiten viergliedrigen Drehgelenkgetriebes von einer an dem Ausleger vorgesehenen Konsole gebildet wird, wobei die Konsole an dem Maschinerahmen um eine Drehachse schwenkbar gelagert ist, die in der Längsmittelebene des Maschinenrahmens liegt.

Eine weitgehend konstante Schwenkgeschwindigkeit und ein gleichmäßiger Drehmomentverlauf bei einem ausreichend großen Schwenkwinkel kann erreicht werden, wenn bei einem Schwenkwinkel von Null, d. h. wenn der Ausleger nicht verschwenkt ist, die erste und zweite Kolben-/Zylinder-Anordnung einen Winkel $\alpha$ einschließen, der zwischen 40° und 80°, vorzugsweise zwischen 50° und 70° liegt, und/oder das erste Getriebeglied des ersten und zweiten viergliedrigen Drehgelenkgetriebes einen Winkel $\alpha$ einschließen, der zwischen 30° und 50°, vorzugsweise zwischen 20° und 40° liegt, wenn der Ausleger nicht verschwenkt ist, und/oder das zweite Getriebeglied des ersten und zweiten viergliedrigen Drehgelenkgetriebes einen Winkel $\alpha$ einschließen, der zwischen 70° und 110°, vorzugsweise zwischen 80° und 100° liegt, wenn der Ausleger nicht verschwenkt ist.

Das erste Gelenk des ersten und zweiten viergliedrigen Drehgelenkgetriebes liegen vorzugsweise in einer senkrecht auf der Längsmittelebene stehenden Querebene des Maschinenrahmens. In Abhängigkeit von den gegebenen Platzverhältnissen können die ersten Gelenke der beiden Drehgelenkgetriebe aber auch in Längsrichtung des Maschinenrahmens zueinander versetzt angeordnet sein. Sie können aber auch ein gemeinsames Gelenk bilden. Das dritte Gelenk des ersten und zweiten viergliedrigen Drehgelenkgetriebes bilden vorzugsweise ein gemeinsames Gelenk. Sie können aber auch zueinander versetzt angeordnet Gelenke sein.

Bei einer weiteren Ausführungsform weist die Fräsmaschine eine Hydraulikeinheit zur Betätigung der ersten und zweiten Kolben-/Zylinderanordnung auf, welche derart ausgebildet ist, dass in einem ersten Betriebsmodus der Kolben der ersten Kolben-/Zylinderanordnung ausgefahren und der Kolben der zweiten Kolben-/Zylinderanordnung eingefahren wird, so dass der Ausleger zu der einen Seite verschwenkt wird, und in einem zweiten Betriebsmodus der Kolben der ersten Kolben-/Zylinderanordnung eingefahren und der Kolben der zweiten Kolben-/Zylinderanordnung ausgefahren wird, so dass der Ausleger zu der anderen Seite verschwenkt wird. Da die Kolben-/Zylinderanordnungen doppelt wirkende Kolben-/Zylinderanordnungen, sind die auf die erste bzw. zweite Kolben-/Zylinderanordnung wirkenden Kräfte kleiner als wenn bei einer Schwenkbewegung in eine Richtung nur einer der beiden Kolben-/Zylinderanordnungen aktiv wäre, so dass die Kolben-/Zylinderanordnungen und die zugehörige Hydraulikeinheit entsprechend kleiner dimensioniert werden können.

Für den Maschinenführer kann eine mit der Hydraulikeinheit zusammenwirkende Bedieneinheit vorgesehen sein, die mindestens ein Bedienelement, beispielsweise einen Steuerhebel, Schalter, Taster etc., aufweist. Die Bedieneinheit kann derart ausgebildet sein, dass das mindestens eine Bedienelement eine erste Stellung zum Verschwenken des Auslegers in die eine Richtung und eine zweite Stellung zum Verschwenken des Auslegers in die andere Richtung einnimmt, so dass die Hydraulikeinheit die jeweiligen Zylinderräume der betreffenden Kolben-/Zylinderanordnungen mit Hydraulikflüssigkeit beaufschlagt.

Nachfolgend wird ein Ausführungsbeispiel der Erfindung unter Bezugnahme auf die Zeichnungen im Einzelnen erläutert.

Es zeigen:

Fig. 1 eine selbstfahrende Fräsmaschine mit einer Fördereinrichtung zusammen mit einem Transportfahrzeug in der Seitenansicht,

Fig. 2    ein Ausführungsbeispiel einer erfindungsgemäßen Schwenkvorrichtung der selbstfahrenden Fräsmaschine in perspektivischer Darstellung;

Fig. 3    die Schwenkvorrichtung von Fig. 2 in der Draufsicht,

Fig. 4    eine schematische Darstellung des ebenen viergliedrigen Drehgelenkgetriebes der Schwenkvorrichtung von Fig. 2,

Fig. 5A    die erfindungsgemäße Schwenkvorrichtung, wobei die Konsole des Auslegers nicht verschwenkt ist,

Fig. 5B    die Schwenkvorrichtung, wobei die Konsole des Auslegers um einen ersten Winkel verschwenkt ist,

Fig. 5C    die Schwenkvorrichtung, wobei die Konsole des Auslegers um einen zweiten Winkel verschwenkt ist, der größer als der erste Winkel ist,

Fig. 5D    die Schwenkvorrichtung, wobei die Konsole des Auslegers um einen dritten Winkel verschwenkt ist, der größer als der zweite Winkel ist,

Fig. 5E    die Schwenkvorrichtung, wobei die Konsole des Auslegers um einen vierten Winkel verschwenkt ist, der größer als der dritte Winkel ist,

Fig. 6    einen Hydraulikschaltplan der Hydraulikeinheit zur Betätigung der Kolben/-Zylinderanordnungen und

Fig. 7    ein Schaubild, das die Schwenkgeschwindigkeit und das Drehmoment in Abhängigkeit von dem Schwenkwinkel zeigt.

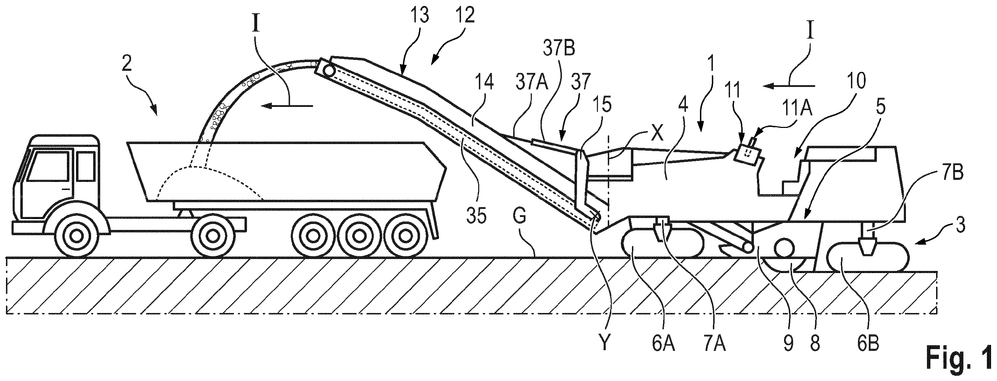

Fig. 1 zeigt eine selbstfahrende Fräsmaschine 1 zusammen mit einem Transportfahrzeug 2 in der Seitenansicht. Die Fräsmaschine 1 verfügt über einen von einem Fahrwerk 3 getragenen Maschinenrahmen 4, an dem eine Arbeitseinrichtung 5 angeordnet ist, mit der die für die Baumaßnahme erforderlichen Arbeiten durchgeführt werden können.

Die Fräsmaschine 1 weist in Arbeitsrichtung I ein vorderes linkes Laufwerk 6A und ein vorderes rechtes Laufwerk und ein hinteres linkes Laufwerk 6B und ein hinteres rechtes Laufwerk auf, denen eine in Arbeitsrichtung I vordere, linke Hubeinrichtung 7A und vordere, rechte Hubeinrichtung und eine hintere, linke Hubeinrichtung 7B und hintere, rechte Hubeinrichtung zugeordnet sind, so dass durch Einfahren bzw. Ausfahren der Hubeinrichtungen die Höhe und Neigung des Maschinenrahmens 4 gegenüber dem Untergrund G verändert werden kann.

Bei der Fräsmaschine 1 handelt es sich um eine Straßenfräsmaschine zum Abfräsen von Straßenbelägen (Großfräse), bei der die Arbeitseinrichtung 5 eine Fräswalze 8 aufweist, die in einem nur andeutungsweise dargestellten Fräswalzengehäuse 9 zwischen den vorderen und hinteren Laufwerken angeordnet ist. Oberhalb des Fräswalzengehäuses 9 befindet sich am Maschinenrahmen der Fahrstand 10 mit einer Bedieneinheit 11 für den Maschinenführer. Die Bedieneinheit weist Bedienelemente 11A auf.

Zum Abführen des abgefrästen Materials weist die Straßenfräsmaschine eine Fördereinrichtung 12 auf, die einen Ausleger 13 umfasst, der einen Rahmen 14 aufweist, an dem ein endlos umlaufendes Förderband 35 angeordnet ist, das in gestrichelten Linien angedeutet ist. Der Ausleger 13 weist eine Konsole 15 auf, die an der Vorderseite des Maschinenrahmens 4 um eine im Wesentlichen senkrecht auf dem Maschinenrahmen stehende Drehachse X schwenkbar gelagert ist, so dass der Ausleger 13 in einer horizontalen Ebene schwenkbar ist.

Da die Straßenfräsmaschine bzw. der Surface Miner eine Frontlader-Fräsmaschine ist, fährt das Transportfahrzeug 2, auf dem das abgefräste Material als Schüttgut verladen wird, der Fräsmaschine voraus. Die Straßenfräsmaschine bzw. der Surface Miner kann aber auch eine Hecklader-Fräsmaschine sein, bei der die Konsole 15 des Auslegers 13 am Heck der Fräsmaschine um eine im Wesentlichen senkrecht auf dem Maschinenrahmen stehende Drehachse schwenkbar gelagert ist.

Die nachfolgend benutzten Begriffe "vertikal" und "horizontal" beziehen sich auf eine ebene Aufstandsfläche für die Fräsmaschine und setzen voraus, dass der Maschinenrahmen gegenüber dem Untergrund nicht in Längsrichtung und/oder Querrichtung geneigt ist.

Der Maschinenführer kann die horizontale Schwenkstellung des Auslegers 13 durch Betätigung von Bedienelementen 11A der Bedieneinheit 11 einstellen. Wenn das Transportfahrzeug 2 zu der Straßenfräsmaschine 1 seitlich versetzt ist, kann der Maschinenführer den Ausleger 13 um den entsprechenden Winkel zu der einen oder anderen Seite verschwenken, so dass das abgefräste Material auf der Ladefläche des Transportfahrzeugs abgeworfen werden kann.

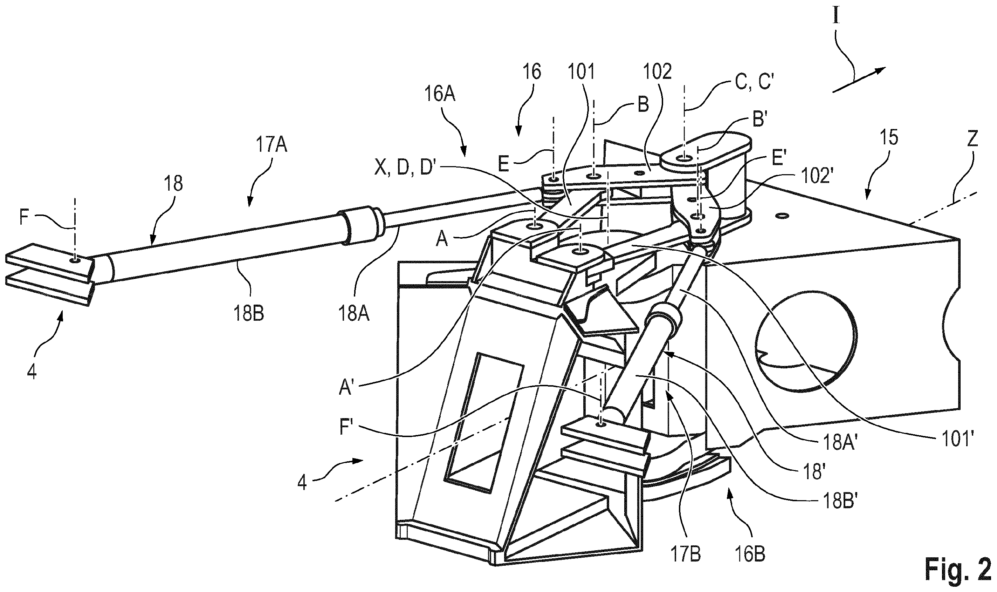

Zum Verschwenken des Auslegers 13 in der horizontalen Ebene ist eine Schwenkvorrichtung 16 vorgesehen, die in Fig. 1 nicht dargestellt ist und unter Bezugnahme auf die Figuren 2 bis 7 noch im Einzelnen beschrieben wird. Der Ausleger 13 kann auch in einer vertikalen Ebene verschwenkt werden. Hierfür ist der Rahmen 14 des Auslegers 13 an der Konsole 15 um eine horizontale Achse Y schwenkbar gelagert. Die Höheneinstellung des Auslegers 13 erfolgt mit einer Kolben-Zylinderanordnung 37, deren Kolben 37A gelenkig mit dem Rahmen 14 des Auslegers 13 und deren Zylinder 37B gelenkig mit der Konsole 15 verbunden ist. Diese Schwenkvorrichtung ist aber nicht Gegenstand der Erfindung.

Die Antriebsleistung für den Fahrantrieb und die Arbeitseinrichtung sowie sonstige Aggregate der Fräsmaschine werden von einem in Fig. 1 nicht dargestellten Verbrennungsmotor bereitgestellt.

Fig. 2 zeigt einen Teil des Maschinenrahmens 4 und einen Teil der Konsole 15 des Auslegers 13 der erfindungsgemäßen Fräsmaschine sowie die erfindungsgemäße Schwenkvorrichtung 16 in perspektivischer Darstellung. Für die Erfindung ist unerheblich, wie der betreffende Teil des Maschinenrahmen und der Konsole ausgebildet ist. Insofern ist die in Fig. 2 gezeigte konkrete Ausbildung dieser Teile nur als ein Beispiel zu verstehen. Unerheblich ist auch, ob die

Konsole an der Front oder dem Heck der Fräsmaschine (Frontlader bzw. Hecklader) befestigt ist.

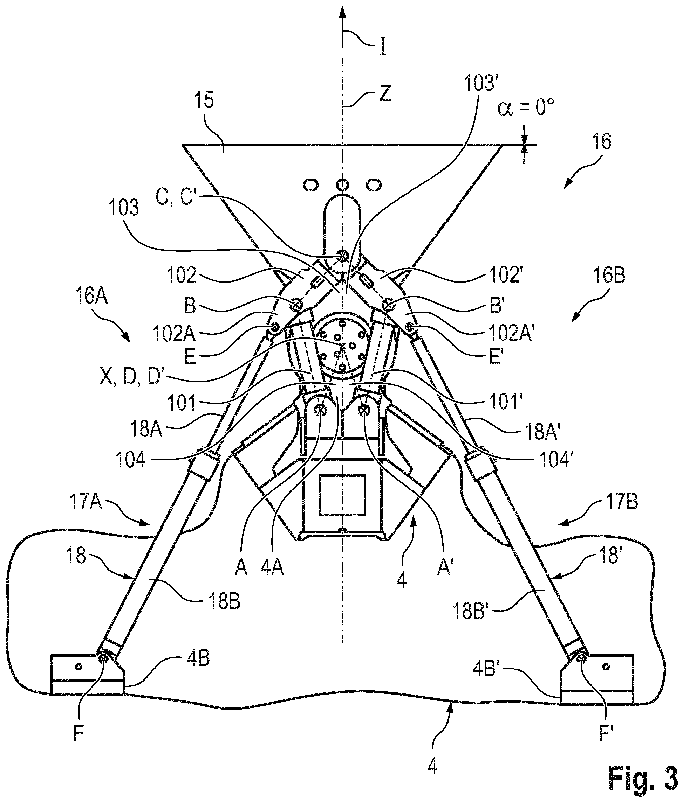

Fig. 3 zeigt die Schwenkvorrichtung 16 in der Draufsicht, wobei die Konsole 15 und damit der Ausleger 13 sich in der Ausgangsstellung befindet (Schwenkwinkel $\alpha$=0°). Bei einer Frontlader-Fräsmaschine beziehen sich die nachfolgenden Bezeichnungen "links" und "rechts" auf die Arbeitsrichtung I der Fräsmaschine. Die zentrale vertikale Drehachse X der Konsole 15 liegt in der Längsmittelebene des Maschinenrahmens 4, in welcher die Längsachse Z des Maschinenrahmens liegt. Die Schwenkvorrichtung 16, die einen in Bezug auf die Längsmittelebene spiegelsymmetrischen Aufbau hat, umfasst ein erstes, in Fig. 3 linkes, ebenes viergelenkiges Drehgelenkgetriebe 16A und ein zweites, in Fig. 3 rechtes, ebenes viergelenkiges Drehgelenkgetriebe 16B sowie einen linken Linearantrieb 17A zum Antrieb des linken Getriebes 16A und einen rechten Linearantrieb 17B zum Antrieb des rechten Getriebes 16B. Der linke Linearantrieb 17A und der rechte Linearantrieb 17B können Kolben/Zylinderanordnungen 18, 18' aufweisen. Es ist zu beachten, dass die beiden Linearantriebe gemeinsam arbeiten und beide Getriebe gemeinsam antreiben. Selbst wenn nur ein Linearantrieb vorhanden wäre, dann würden beide Getriebe angetrieben werden.

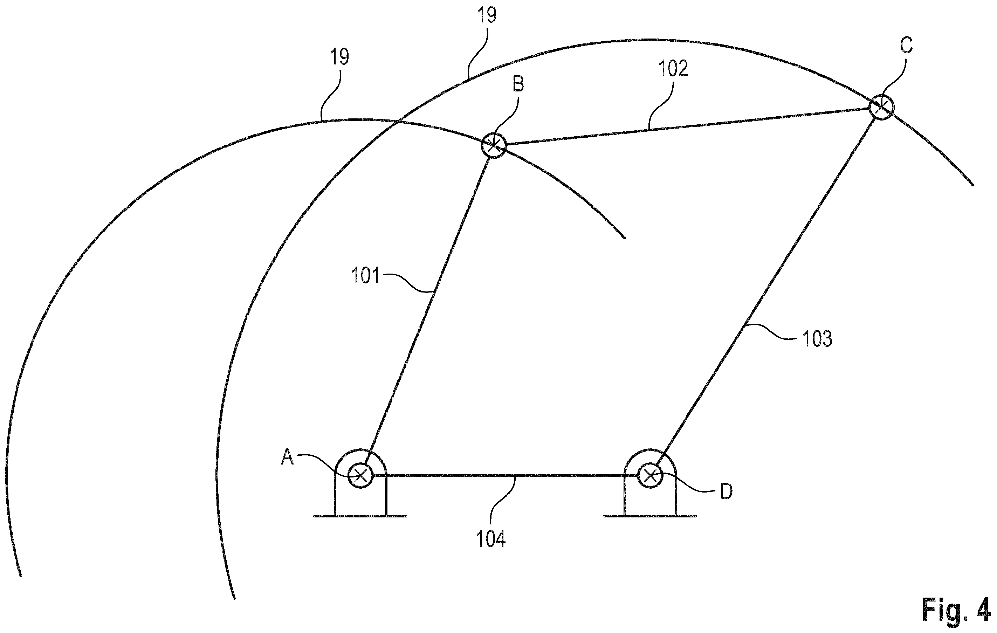

Fig. 4 zeigt eine schematische Darstellung der einzelnen Getriebeglieder und Gelenke der beiden Drehgelenkgetriebe, wobei die einander entsprechenden Glieder und Gelenke in den Figuren 3 und 4 mit den gleichen Bezugszeichen bezeichnet sind.

Das linke viergliedrige Drehgelenkgetriebe 16A umfasst ein erstes Getriebeglied 101, dessen eines Ende mit einem ersten Gelenk A gelenkig an dem Maschinenrahmen 4 fixiert ist und dessen anderes Ende mit einem zweiten Gelenk B gelenkig mit einem Ende eines zweiten Getriebegliedes 102 verbunden ist, dessen anderes Ende mit einem dritten Gelenk C gelenkig mit einem Ende eines dritten Getriebegliedes 103 verbunden ist, dessen anderes Ende mit einem vierten Gelenk D gelenkig an dem Maschinerahmen 4 fixiert ist. Ein viertes Getriebeglied 104 wird von einem von der Vorderseite oder dem Heck der Fräsmaschine vorspringenden Teil 4A des Maschinenrahmens 4 gebildet. Folglich ist das vierte Getriebeglied 104 als Gestell festgelegt. Das erste Getriebeglied 101 ist eine flache Stange (Flachprofil) und das zweite Getriebeglied 102 wird von zwei flachen Stangen (Flachprofile) gebildet, zwischen denen das erste Getriebeglied 101 drehbar gelagert ist.

Die zentrale Drehachse X der Konsole 15 des Auslegers 13 liegt im Zentrum des vorspringenden Teils 4A des Maschinenrahmens 4 in der Längsmittelebene und die Drehachse des ersten Gelenks A liegt auf der linken Seite der Längsmittelebene. Wenn sich die Konsole 15 in der Ausgangsstellung befindet, liegt die Drehachse des dritten Gelenks C in der Längsmittelebene.

Das zweite Getriebeglied 102 weist einen Ansatz 102A auf, der sich seitlich über das zweite Gelenk B nach außen auf die linke Seite erstreckt. Das freie Ende des Kolbens 18A der linken Kolben-/Zylinderanordnung 18 ist mit einem Gelenk E gelenkig mit dem äußeren Ansatz 102A des zweiten Getriebegliedes 102 verbunden, während der Zylinder 18B der linken Kolben-/Zylinderanordnung 18 mit einem Gelenk F gelenkig mit einem Lagerbock 4B des Maschinenrahmens 4 (Gestell) verbunden ist, was in Fig. 3 nur andeutungsweise dargestellt ist.

Das rechte ebene viergliedrige Drehgelenkgetriebe 16B hat den gleichen Aufbau wie das linke Drehgelenkgetriebe 16A. Die Getriebeglieder und Gelenke des rechten Drehgelenkgetriebes sind daher mit gestrichenen Bezugszeichen bezeichnet.

Das dritte Gelenk C, C' und das vierte Gelenk D, D' des linken und rechten Drehgelenkgetriebe 16A, 16B werden jeweils von einem gemeinsamen Drehgelenk C, C' bzw. D, D' gebildet. Das erste Gelenk A, A' des linken und rechten Drehgelenkgetriebes 16A , 16B liegen zu beiden Seiten der Längsmittelebene in einer zu der Längsmittelebene querverlaufenden Querebene. Bei dem vorliegenden Ausführungsbeispiel schließen die linke und rechte Kolben-/Zylinder-Anordnung 18, 18' des linken und rechten viergliedrigen Drehgelenkgetriebes 16A, 16B einen Winkel von 54° ein, wenn der Ausleger 13 nicht verschwenkt ist. Das erste Getriebeglied 101, 101' des linken und rechten viergliedrigen Drehgelenkgetriebes 16A, 16B schließen einen Winkel von 24° ein, wenn der Ausleger 13 nicht verschwenkt ist. Das zweite Getriebeglied 102, 102' des linken und rechten Drehgelenkgetriebes 16A, 16B schließen einen Winkel von ca. 90° ein, wenn der Ausleger 13 nicht verschwenkt ist.

Der Laufgrad oder Freiheitsgrad F des ebenen Getriebes ist von der Zahl n der Glieder (einschließlich Gestell) und der Zahl g der Gelenke mit dem jeweiligen Gelenkfreiheitsgrad f abhängig. Die Drehgelenke haben einen Gelenkfreiheitsgrad f=1.

Für die beiden ebenen viergliedrigen Drehgelenkgetriebe 16A, 16B gelten die Grüblersche Laufbedingung:

$$F = 3(n-1) - 2g$$

mit n=4 und g=4

$$F = 1$$

Die beiden Drehgelenkgetriebe 16A, 16B führen mit einem Freiheitsgrad F = 1 zu einem Zwangslauf. Wenn der Kolben 18A der linken Kolben-/Zylinderanordnung 18 ausgefahren wird, schwenkt die Konsole 15 im Uhrzeigersinn nach rechts, und wenn der Kolben 18A der linken Kolben-/Zylinderanordnung 18 eingefahren wird, schwenkt die Konsole entgegen dem Uhrzeigersinn nach links. Wenn der Kolben 18A' der rechten Kolben-/Zylinderanordnung 18' ausgefahren wird, schwenkt die Konsole 15 entgegen dem Uhrzeigersinn nach links, und wenn der Kolben 18A' der rechten Kolben-/Zylinderanordnung 18' eingefahren wird, schwenkt die Konsole im Uhrzeigersinn nach rechts. Die Achsen der Gelenke bewegen sich beim Verschwenken des Auslegers 13 auf vorgegebenen Bahnen 19 (Fig. 4). Beim Ausfahren des Kolbens der einen Kolben/Zylinderanordnung wird der Kolben der anderen Kolben/Zylinderanordnung in den Zylinder gedrückt und umgekehrt. Daher ist es möglich, den Ausleger 15 mit nur einem Drehgelenkgetriebe zu verschwenken. Das doppelte Drehgelenkgetriebe 16A, 16B hat aber den Vorteil, dass beide Kolben/Zylinderanordnungen 18, 18' gleichzeitig betätigt werden können, so dass die zum Verschwenken aufzubringenden Kräfte geringer sein können. Folglich können die Kolben/Zylinderanordnungen kleiner dimensioniert werden, was Kosten, Gewicht und Platz spart.

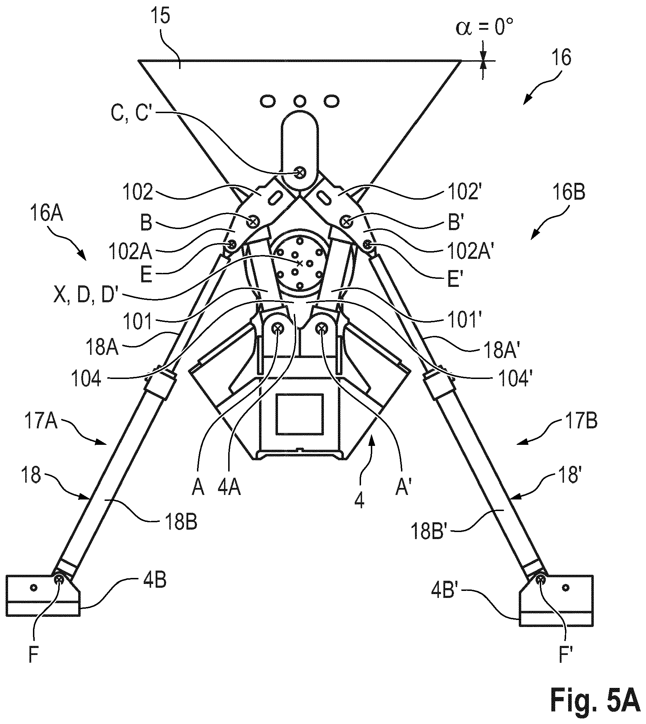

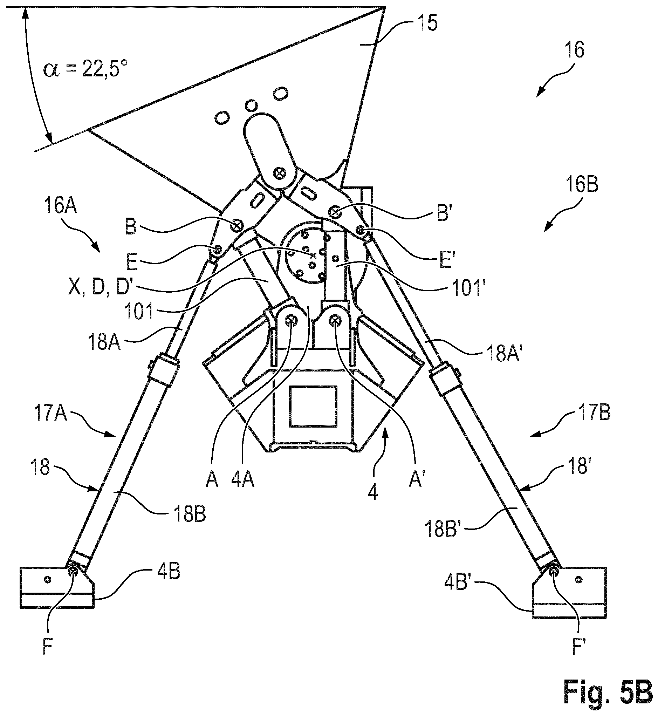

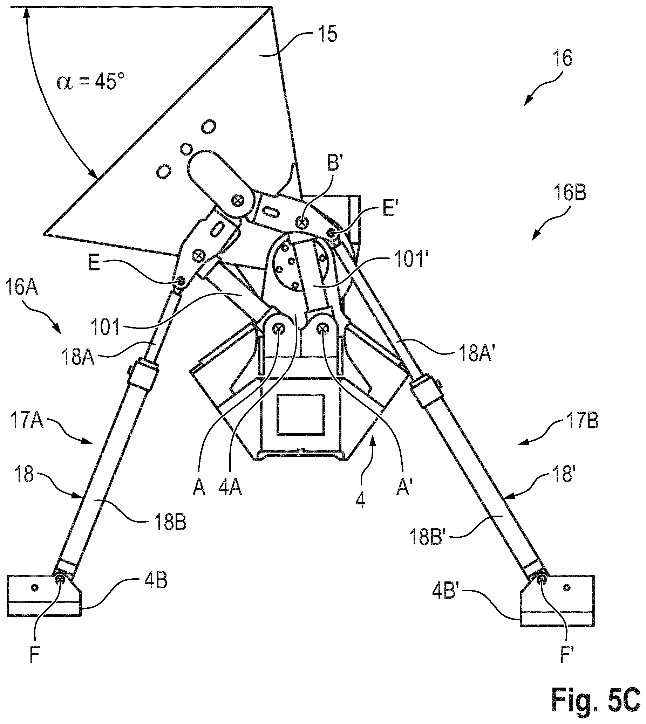

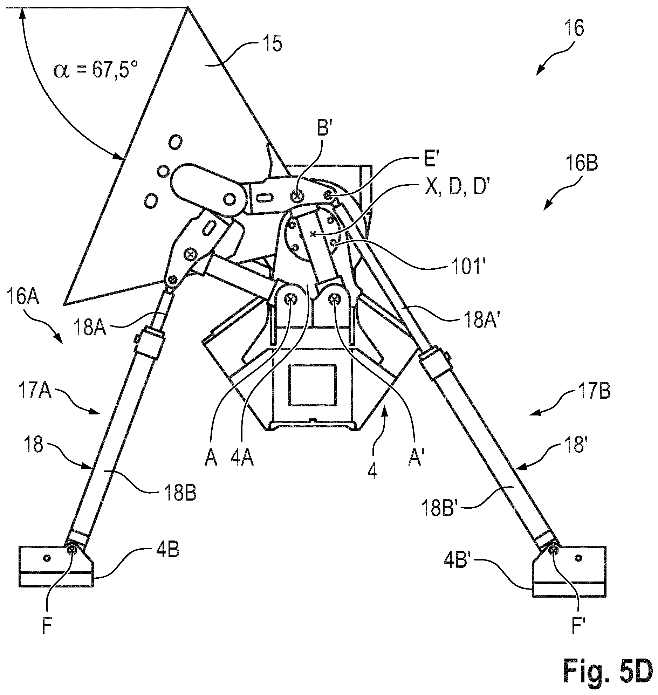

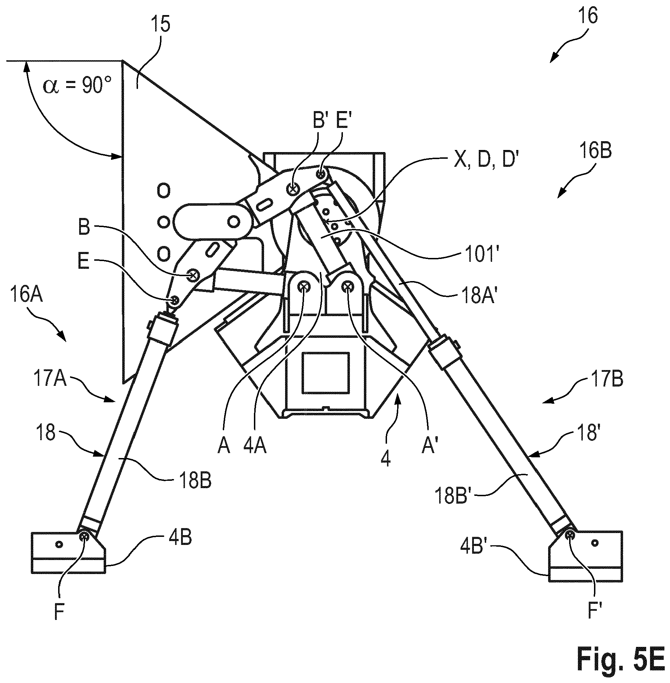

Die Figuren 5A bis 5E zeigen die Bewegung des Auslegers 13 bzw. dessen Konsole 15, wenn die Kolben-/Zylinderanordnungen 18, 18' betätigt werden. Es zeigt sich, dass die Schwenkvorrichtung 16 einen relativ großen Schwenkwinkel von 90° erlaubt.

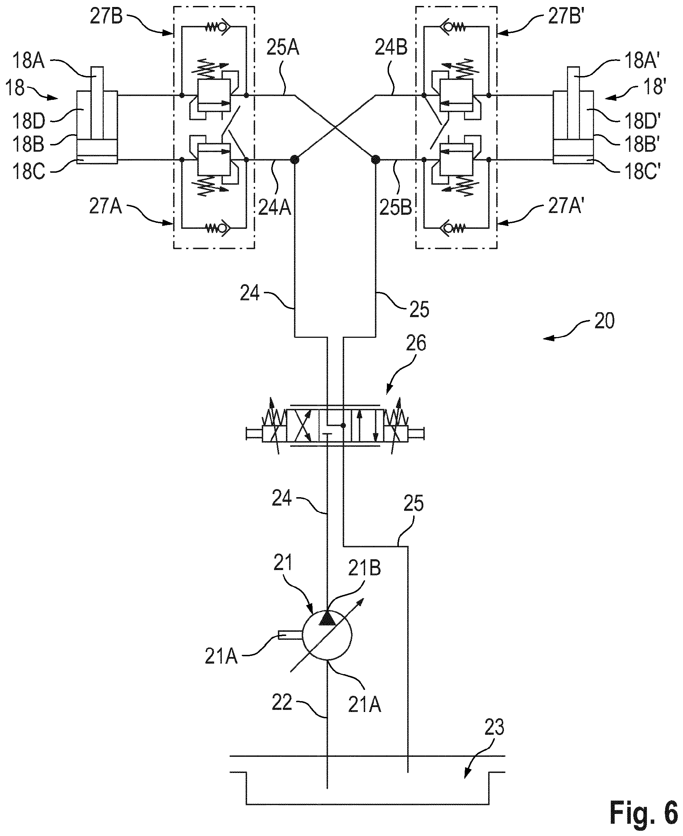

Zum Betätigen der Kolben/Zylinderanordnungen 18, 18' weist die Fräsmaschine eine Hydraulikeinheit 20 auf, die Bestandteil des nicht dargestellten Hydrauliksystems der Fräsmaschine sein kann. Fig. 6 zeigt den Hydraulikschaltplan der Hydraulikeinheit 20. Die Kolben-/Zylinderanordnungen 18, 18' sind doppelt wirkende Kolben-/Zylinderanordnungen, die jeweils eine erste Kammer und zweite Kammer aufweisen.

Die Hydraulikeinheit 20 weist eine Hydraulikpumpe 21 auf, die bei dem vorliegenden Ausführungsbeispiel eine Verstellerpumpe mit einem elektromagnetisch gesteuerten proportionalen Druckregelventil ist, das von einer nicht dargestellten zentralen Steuereinheit angesteuert wird, so dass der Volumenstrom der Pumpe gesteuert werden kann. An dem Sauganschluss 21A der Hydraulikpumpe 21 ist eine Saugleitung 22 angeschlossen, die zu einem Tank 23 führt, so dass die Hydraulikpumpe aus dem Tank Hydraulikflüssigkeit ansaugen kann. An dem Druckanschluss 21B der Hydraulikpumpe 21 ist eine erste Hydraulikleitung 24 angeschlossen, die sich in einen ersten Leitungszweig 24A und einen zweiten Leitungszweig 24B verzweigt, wobei der erste Zweig 24A an einen Anschluss der ersten Kammer 18C der ersten (linken) Kolben-/Zylinderanordnung 18 und der zweite Zweig 24B an einen Anschluss der zweiten Kammer 18D' der zweiten (rechten) Kolben-/Zylinderanordnung 18' angeschlossen ist. Von einem Anschluss der zweiten Kammer 18D der ersten Kolben-/Zylinderanordnung 18 und einem Anschluss der ersten Kammer 18C' der zweiten Kolben-/Zylinderanordnung 18' führen die Leitungszweige 25A, 25B einer zweiten Hydraulikleitung 25 zu dem Tank 23. In die erste und zweite Hydraulikleitung 24, 25 ist ein 4/3-Wege-Proportionalventil 26 geschaltet, mit dem der Fluss in den Leitungen in Abhängigkeit von der Stellung des Ventils unterbrochen, hergestellt oder umgekehrt werden kann. In die Leitungszweige 24A, 24B bzw. 25A, 25B der ersten und zweiten Hydraulikleitung 24 bzw. 25 sind Lasthalteventile 27A, 27B bzw. 27A', 27B' geschaltet, um unkontrollierte Bewegungen des Auslegers 13 zu verhindern.

Wenn das Proportionalventil 26 betätigt wird, strömt in der einen Stellung Hydraulikflüssigkeit in die erste Kammer 18C der ersten Kolben-/Zylinderanordnung 18 und die zweite Kammer 18D' der zweiten Kolben-/Zylinderanordnung 18', so dass der erste Kolben 18A ausgefahren und der zweite Kolben 18A' eingefahren wird, wodurch der Ausleger 13 nach rechts schwenkt. In der anderen Stellung strömt Hydraulikflüssigkeit in die zweite Kammer 18D der ersten Kolben-/Zylinderanordnung 18 und die erste Kammer 18C' der zweiten Kolben-/Zylinderanordnung 18', so dass der erste Kolben 18A eingefahren und der zweite Kolben 18A' ausgefahren wird, wodurch der Ausleger 13 nach links schwenkt.

Die Bedieneinheit 11, die mit der Steuereinheit bzw. der Hydraulikeinheit zusammenwirkt, weist bei dem vorliegenden Ausführungsbeispiel einen Steuerhebel 11A auf, der aus einer Neutralposition nach links oder rechts verschwenkt werden kann. Wenn der Maschinenführer den Steuerhebel nach links bzw. rechts schwenkt, wird das 4/3-Wege-Proportionalventil 26 derart betätigt, dass der Ausleger 13 nach links bzw. rechts schwenkt.

Die erfindungsgemäße Schwenkvorrichtung 16 zeichnet sich dadurch aus, dass die Winkelgeschwindigkeit, mit der sich der Ausleger 13 in die eine oder andere

Richtung dreht, über den gesamten Schwenkbereich weitgehend konstant ist. Dabei ist zu beachten, dass dies einen konstanten Volumenstrom der von der Hydraulikpumpe 21 geförderten Hydraulikflüssigkeit bzw. eine konstante Ansteuerung des Proportionalventils bzw. eine konstante Auslenkung des Steuerhebels voraussetzt. Die Feinfühligkeit der Steuerung des Auslegers ergibt sich zum Einen daraus, dass das Wegeventil ein proportionales Wegeventil ist, wodurch der Maschinenführer die Geschwindigkeit, mit der der Ausleger verschwenkt wird, frei wählen kann, und zum Anderen daraus, dass das Getriebe so ausgelegt ist, dass sich bei einer konstanten Antriebsgeschwindigkeit des mindestens einen Linearantriebs auch eine konstante Schwenkgeschwindigkeit ergibt, so dass der Maschinenführer bei der Bedienung des Steuerhebels nicht von schwankenden Geschwindigkeiten irritiert wird. Daher erlaubt die Schwenkvorrichtung eine feinfühlige Steuerung des Auslegers 13 durch den Maschinenführer.

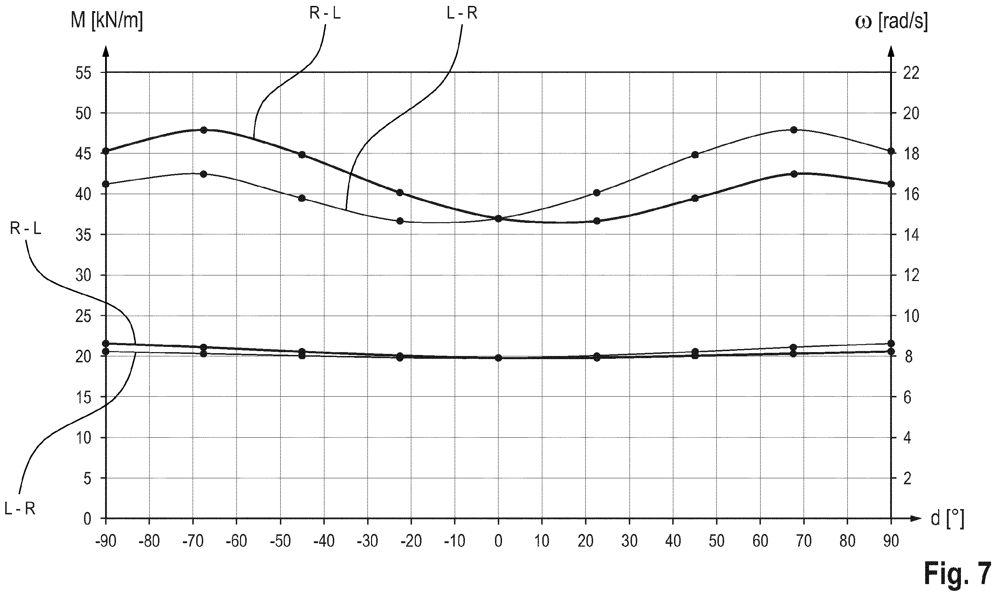

Fig. 7 zeigt die Winkelgeschwindigkeit ω [°/s] des Auslegers 13 bei einer Schwenkbewegung von rechts nach links (Graf R-L) bzw. einer Schwenkbewegung von links nach rechts (Graf L-R) über einen Winkelbereich von +90° bis -90° sowie den Drehmomentverlauf M [kNm] bei einer Schwenkbewegung von rechts nach links (Graf R-L) bzw. einer Schwenkbewegung von links nach rechts (Graf L-R). Es zeigt sich, dass die Winkelgeschwindigkeit ω über den gesamten Schwenkbereich weitgehend konstant ist und mit zunehmenden Schwenkwinkel in beiden Richtungen nur leicht zunimmt. Darüber hinaus verändert sich das von den Kolben-/Zylinderanordnungen 18, 18' aufgebrachte Drehmoment M nur unwesentlich über den gesamten Schwenkbereich. Bei dem vorliegenden Ausführungsbeispiel liegt das Drehmoment nicht über 50 kNm. Da die Druckbeaufschlagung mit Fluid in beide Richtungen wirkt, und keine großen Drehmomente auftreten, können die Kolben-/Zylinderanordnungen 18, 18' relativ klein dimensioniert werden.

**Patentansprüche**

1. Selbstfahrende Fräsmaschine, insbesondere Straßenfräsmaschine oder Surface-Miner, welche einen von Laufwerken (6A, 6B) getragenen Maschinenrahmen (4), eine am Maschinenrahmen (4) vorgesehene Arbeitseinrichtung (5) zum Bearbeiten des Untergrunds, und eine Fördereinrichtung (12) zum Abführen von Material aufweist, wobei die Fördereinrichtung (12) einen Ausleger (13), der am Maschinenrahmen (4) um eine im Wesentlichen senkrecht auf dem Maschinenrahmen stehende Drehachse (X) schwenkbar gelagert ist, und eine Schwenkvorrichtung (16) zum Verschwenken des Auslegers (13) aufweist, wobei die Schwenkvorrichtung (16) mindestens einen Linearantrieb (17A, 17B) umfasst, **dadurch gekennzeichnet, dass**

   die Schwenkvorrichtung (16) mindestens ein Getriebe (16A, 16B) mit mehreren Getriebegliedern (101, 102, 103, 104; 101', 102', 103', 104') und der sie verbindenden Gelenke (A, B, C, D) und mindestens einen Linearantrieb (17A, 17B) zum Antreiben mindestens einer der Getriebeglieder umfasst, wobei das mindestens eine Getriebe der Schwenkvorrichtung als ein ebenes viergliedriges Drehgelenkgetriebe (16A, 16B) ausgebildet ist, wobei der Maschinenrahmen (4) ein Getriebeglied (104) des Drehgelenkgetriebes bildet.

2. Selbstfahrende Fräsmaschine nach Anspruch 1, **dadurch gekennzeichnet, dass** die Schwenkvorrichtung (16) ein erstes viergliedriges Drehgelenkgetriebe (16A) und eine zweites viergliedriges Drehgelenkgetriebe (16B) aufweist, wobei das erste und zweite Drehgelenkgetriebe zu einer Längsmittelebene des Maschinenrahmens (4) spiegelsymmetrisch angeordnet sind.

3. Selbstfahrende Fräsmaschine nach Anspruch 2, **dadurch gekennzeichnet, dass** das erste und zweite viergliedrige Drehgelenkgetriebe (16A, 16B) ein erstes Getriebeglied (101), dessen eines Ende mit einem ersten Gelenk (A) gelenkig an dem Maschinenrahmen (4) fixiert ist und dessen anderes Ende mit einem zweiten Gelenk (B) gelenkig mit einem Ende eines zweiten Getriebegliedes (102) verbunden ist, dessen anderes Ende mit einem dritten Gelenk (C) gelenkig mit einem Ende eines dritten Getriebegliedes (103) verbunden ist, dessen anderes Ende mit einem vierten Gelenk (104) gelenkig an dem Maschinerahmen (4) fixiert ist, aufweist.

4. Selbstfahrende Fräsmaschine nach Anspruch 3, **dadurch gekennzeichnet, dass** ein erster Linearantrieb (17A) vorgesehen ist, der eine erste Kolben-/Zylinderanordnung (18) aufweist, deren Zylinder (18A) an einem Ende gelenkig mit einem der Getriebeglieder des ersten viergliedrigen Drehgelenkgetriebes (16A) verbunden ist und deren Kolben (18B) an einem Ende gelenkig an dem Maschinenrahmen (4) fixiert ist oder deren Zylinder (18A) an einem Ende gelenkig an dem Maschinenrahmen (4) fixiert ist und deren Kolben (18B) an einem Ende gelenkig mit einem der Getriebeglieder des ersten viergliedrigen Drehgelenkgetriebes verbunden ist, und

   ein zweiter Linearantrieb (17B) vorgesehen ist, der eine zweite Kolben-/Zylinderanordnung (18') aufweist, deren Zylinder (18A') an einem Ende gelenkig mit einem der Getriebeglieder des zweiten viergliedrigen Drehgelenkgetriebes (16B) verbunden ist und deren Kolben (18B') an einem Ende gelenkig an dem Maschinenrahmen (4) fixiert ist oder deren Zylinder (18B') an einem Ende gelenkig an dem Maschinenrahmen (4) fixiert ist und deren Kolben (18B')an einem Ende gelenkig mit einem der Getriebeglieder des ersten viergliedrigen Drehgelenkgetriebes verbunden ist.

5. Selbstfahrende Fräsmaschine nach Anspruch 4, **dadurch gekennzeichnet, dass** der Kolben oder Zylinder der ersten Kolben-/Zylinderanordnung (18) an einem Ende gelenkig mit dem zweiten Getriebeglied (102) des ersten viergliedrigen Drehgelenkgetriebes (16A) verbunden ist, und der Kolben oder Zylinder der zweiten Kolben-/Zylinderanordnung (18') an einem Ende gelenkig mit dem zweiten Getriebeglied (102') des zweiten viergliedrigen Drehgelenkgetriebes (16B) verbunden ist.

**6.** Selbstfahrende Fräsmaschine nach Anspruch 5, **dadurch gekennzeichnet, dass** das zweite Getriebeglied (102) des ersten viergliedrigen Drehgelenkgetriebes (16A) einen Ansatz (102A) aufweist, an dem der Kolben oder Zylinder der ersten Kolben-/Zylinderanordnung (18) an einem Ende gelenkig mit dem zweiten Getriebeglied (102) des ersten viergliedrigen Drehgelenkgetriebes (16A) verbunden ist, und dass das zweite Getriebeglied (102') des zweiten viergliedrigen Drehgelenkgetriebes (16B) einen Ansatz (102A') aufweist, an dem der Kolben oder Zylinder der zweiten Kolben-/Zylinderanordnung (18') an einem Ende gelenkig mit dem zweiten Getriebeglied (102') des zweiten viergliedrigen Drehgelenkgetriebes (16B) verbunden ist.

**7.** Selbstfahrende Fräsmaschine nach einem der Ansprüche 3 bis 6, **dadurch gekennzeichnet, dass** das erste Getriebeglied (101, 101') des ersten und zweiten viergliedrigen Drehgelenkgetriebes (16A, 16B) von einer flachen Stange und das zweite Getriebeglied (202, 202') des ersten und zweiten viergliedrigen Drehgelenkgetriebes (16A, 16B) von zwei im Abstand zueinander angeordneten flachen Stangen gebildet werden, wobei das eine Ende der Stange des ersten Getriebegliedes (201, 201') zwischen den Enden der beiden Stangen des zweiten Getriebegliedes (202, 202') drehbar gelagert ist.

**8.** Selbstfahrende Fräsmaschine nach einem der Ansprüche 3 bis 7, **dadurch gekennzeichnet, dass** das dritte Getriebeglied (203, 203') des ersten und zweiten viergliedrigen Drehgelenkgetriebes (16A, 16B) von einer an dem Ausleger (13) vorgesehenen Konsole (15) gebildet wird, wobei die Konsole (15) an dem Maschinerahmen (4) um eine Drehachse (X) schwenkbar gelagert ist, die in der Längsmittelebene des Maschinenrahmens (4) liegt.

**9.** Selbstfahrende Fräsmaschine nach einem der Ansprüche 4 bis 8, **dadurch gekennzeichnet, dass** die erste und zweite Kolben-/Zylinder-Anordnung (18, 18') einen Winkel α einschließen, der zwischen 40° und 80°, vorzugsweise zwischen 50° und 70° liegt, wenn der Ausleger (13) nicht verschwenkt ist.

**10.** Selbstfahrende Fräsmaschine nach einem der Ansprüche 3 bis 9, **dadurch gekennzeichnet, dass** das erste Getriebeglied (101, 101') des ersten und zweiten viergliedrigen Drehgelenkgetriebes (16A, 16B) einen Winkel α einschließen, der zwischen 30° und 50°, vorzugsweise zwischen 20° und 40° liegt, wenn der Ausleger (13) nicht verschwenkt ist, und/oder das zweite Getriebeglied (102, 102') des ersten und zweiten viergliedrigen Drehgelenkgetriebes (16A, 16B) einen Winkel α einschließen, der zwischen 70° und 110°, vorzugsweise zwischen 80° und 100° liegt, wenn der Ausleger nicht verschwenkt ist.

**11.** Selbstfahrende Fräsmaschine nach einem der Ansprüche 3 bis 10, **dadurch gekennzeichnet, dass** das erste Gelenk (A, A') des ersten und zweiten viergliedrigen Drehgelenkgetriebes (16A, 16B) im Abstand zueinander in einer senkrecht auf der Längsmittelebene stehenden Querebene des Maschinenrahmens (4) liegen, und/oder das dritte Gelenk (C, C') des ersten und zweiten viergliedrigen Drehgelenkgetriebes (16A, 16B) ein gemeinsames Gelenk bilden.

**12.** Selbstfahrende Fräsmaschine nach einem der Ansprüche 4 bis 11, **dadurch gekennzeichnet, dass** die Fräsmaschine eine Hydraulikeinheit (20) zur Betätigung der ersten und zweiten Kolben-/Zylinderanordnung (18, 18') aufweist, wobei die Hydraulikeinheit (20) derart ausgebildet ist, dass in einem ersten Betriebsmodus der Kolben (18A) der ersten Kolben-/Zylinderanordnung (18) ausgefahren und der Kolben (18A') der zweiten Kolben-/Zylinderanordnung (18') eingefahren wird, so dass der Ausleger (13) zu der einen Seite verschwenkt wird, und in einem zweiten Betriebsmodus der Kolben (18A) der ersten Kolben-/Zylinderanordnung (18) eingefahren und der Kolben (18A') der zweiten Kolben-/Zylinderanordnung (18) ausgefahren wird, so dass der Ausleger (13) zu der anderen Seite verschwenkt wird.

**13.** Selbstfahrende Fräsmaschine nach Anspruch 12, **dadurch gekennzeichnet, dass** eine mit der Hydraulikeinheit (20) zusammenwirkende Bedieneinheit (11) vorgesehen ist, die mindestens ein Bedienelement (11A) aufweist, das derart mit der Hydraulikeinheit (20) zusammenwirkt, dass das mindestens eine Bedienelement (11A) eine erste Stellung zum Verschwenken des Auslegers (13) in die eine Richtung und eine zweite Stellung zum Verschwenken des Auslegers (113) in die andere Richtung einnimmt.

**14.** Selbstfahrende Fräsmaschine nach einem der Ansprüche 1 bis 13, **dadurch gekennzeichnet, dass** an dem Ausleger (13) ein Förderband (35) vorgesehen ist.

**Claims**

**1.** Self-propelled milling machine, in particular a road milling machine or surface miner, which milling machine has a machine frame (4) supported by running gears (6A, 6B), a working device (5) provided on the machine frame (4) for working the ground, and a conveyor device (12) for removing material, wherein the conveyor device (12) has a boom (13) which is mounted on the machine frame (4) so as to pivot about an axis of rotation (X) which is substantially perpendicular to the machine frame, and a pivoting apparatus (16) for pivoting the boom (13), wherein the pivoting apparatus (16) comprises at least one linear drive (17A, 17B), **characterised in that**

the pivoting apparatus (16) comprises at least one mechanism (16A, 16B) having a plurality of mechanism links (101, 102, 103, 104; 101', 102', 103', 104') and the joints (A, B, C, D) connecting them and at least one linear drive (17A, 17B) for driving at least one of the mechanism links, wherein the at least one mechanism of the pivoting apparatus is designed as a planar four-link pivot joint mechanism (16A, 16B), wherein the machine frame (4) forms a mechanism link (104) of the pivot joint mechanism.

2. Self-propelled milling machine according to claim 1, **characterised in that** the pivoting apparatus (16) has a first four-link pivot joint mechanism (16A) and a second four-link pivot joint mechanism (16B), wherein the first and second pivot joint mechanisms is arranged mirror-symmetrically to a longitudinal centre plane of the machine frame (4).

3. Self-propelled milling machine according to claim 2, **characterised in that** the first and second four-link pivot joint mechanisms (16A, 16B) have a first mechanism link (101), one end of which is articulated to the machine frame (4) by a first joint (A), and the other end of which is articulated to one end of a second mechanism link (102) by a second joint (B), the other end of which is articulated to one end of a third mechanism link (103) by a third joint (C), the other end of which is articulated to the machine frame (4) by a fourth joint (104).

4. Self-propelled milling machine according to claim 3, **characterised in that** a first linear drive (17A) is provided, which has a first piston/cylinder arrangement (18), the cylinder (18A) of which is articulated at one end to one of the mechanism links of the first four-link pivot joint mechanism (16A), and the piston (18B) of which is articulated at one end to the machine frame (4), or the cylinder (18A) of which is articulated at one end to the machine frame (4), and the piston (18B) of which is articulated at one end to one of the mechanism links of the first four-link pivot joint mechanism, and a second linear drive (17B) is provided, which has a second piston/cylinder arrangement (18'), the cylinder (18A') of which is articulated at one end to one of the mechanism links of the second four-link pivot joint mechanism (16B), and the piston (18B') of which is articulated at one end to the machine frame (4), or the cylinder (18B') of which is articulated at one end to the machine frame (4), and the piston (18B') of which is articulated at one end to one of the mechanism links of the first four-link pivot joint mechanism.

5. Self-propelled milling machine according to claim 4, **characterised in that** the piston or cylinder of the first piston/cylinder arrangement (18) is articulated at one end to the second mechanism link (102) of the first four-link pivot joint mechanism (16A), and the piston or cylinder of the second piston/cylinder arrangement (18') is articulated at one end to the second mechanism link (102') of the second four-link pivot joint mechanism (16B).

6. Self-propelled milling machine according to claim 5, **characterised in that** the second link (102) of the first four-link pivot joint mechanism (16A) has a lug (102A) on which the piston or cylinder of the first piston/cylinder arrangement (18) is articulated at one end to the second mechanism link (102) of the first four-link pivot joint mechanism (16A), and **in that** the second mechanism link (102') of the second four-link pivot joint mechanism (16B) has a lug (102A') on which the piston or cylinder of the second piston/cylinder arrangement (18') is articulated at one end to the second mechanism link (102') of the second four-link pivot joint mechanism (16B).

7. Self-propelled milling machine according to any of claims 3 to 6, **characterised in that** the first mechanism link (101, 101') of the first and second four-link pivot joint mechanisms (16A, 16B) are formed by one flat rod and the second mechanism link (202, 202') of the first and the second four-link pivot joint mechanisms (16A, 16B) are formed by two spaced-apart flat rods, wherein one end of the rod of the first mechanism link (201, 201') is rotatably mounted between the ends of the two rods of the second mechanism link (202, 202').

8. Self-propelled milling machine according to any of claims 3 to 7, **characterised in that** the third mechanism link (203, 203') of the first and second four-link pivot joint mechanism (16A, 16B) is formed by a bracket (15) provided on the boom (13), wherein the bracket (15) is mounted on the machine frame (4) so as to pivot about an axis of rotation (X) which lies in the longitudinal centre plane of the machine frame (4).

9. Self-propelled milling machine according to any of claims 4 to 8,
**characterised in that** the first and second piston/-cylinder arrangement (18, 18') enclose an angle α which is between 40° and 80°, preferably between 50° and 70°, when the boom (13) is not pivoted.

10. Self-propelled milling machine according to any of claims 3 to 9,
**characterised in that** the first mechanism link (101, 101') of the first and second four-link pivot joint mechanism (16A, 16B) enclose an angle α which is between 30° and 50°, preferably between 20° and 40°, when the boom (13) is not pivoted, and/or the second mechanism link (102, 102') of the first and second four-link pivot joint mechanism (16A, 16B) enclose an angle α which is between 70° and 110°, preferably between 80° and 100°, when the boom is not pivoted.

11. Self-propelled milling machine according to any of claims 3 to 10,
**characterised in that** the first joint (A, A') of the first and second four-link pivot joint mechanisms (16A, 16B) lie spaced apart from one another in a transverse plane of the machine frame (4), which transverse plane is perpendicular to the longitudinal centre plane, and/or the third joint (C, C') of the first and second four-link pivot joint mechanisms (16A, 16B) form a common joint.

12. Self-propelled milling machine according to any of claims 4 to 11,
**characterised in that** the milling machine has a hydraulic unit (20) for actuating the first and second piston/cylinder arrangements (18, 18'), the hydraulic unit (20) being designed such that, in a first operating mode, the piston (18A) of the first piston/cylinder arrangement (18) is extended and the piston (18A') of the second piston/cylinder arrangement (18') is retracted, so that the boom (13) is pivoted to the one side, and, in a second operating mode, the piston (18A) of the first piston/cylinder arrangement (18) is retracted and the piston (18A') of the second piston/cylinder arrangement (18) is extended, so that the boom (13) is pivoted to the other side.

13. Self-propelled milling machine according to claim 12,
**characterised in that** an operating unit (11) which interacts with the hydraulic unit (20) is provided and has at least one operating element (11A) which interacts with the hydraulic unit (20) such that the at least one operating element (11A) assumes a first position for pivoting the boom (13) in one direction and a second position for pivoting the boom (113) in the other direction.

14. Self-propelled milling machine according to any of claims 1 to 13,
**characterised in that** a conveyor belt (35) is provided on the boom (13).

## Revendications

1. Fraiseuse automotrice, en particulier fraiseuse routière ou Surface Miner, qui comprend un châssis d'engin (4) supporté par des trains de roulement (6A, 6B), un dispositif de travail (5) prévu sur le châssis d'engin (4) pour travailler le sol, et un dispositif de convoyage (12) pour évacuer les matériaux, le dispositif de convoyage (12) comportant une flèche (13) qui est montée sur le châssis d'engin (4) de manière à pouvoir pivoter autour d'un axe de rotation (X) disposé sensiblement verticalement sur le châssis d'engin, et un dispositif de pivotement (16) pour faire pivoter la flèche (13), le dispositif de pivotement (16) comprenant au moins un entraînement linéaire (17A, 17B),
**caractérisée en ce que**

le dispositif de pivotement (16) comprend au moins un mécanisme (16A, 16B) muni de plusieurs éléments de transmission (101, 102, 103, 104 ; 101', 102', 103', 104') et des articulations (A, B, C, D) qui les relient, et au moins un entraînement linéaire (17A, 17B) pour entraîner au moins l'un des éléments de transmission, ledit au moins un mécanisme du dispositif de pivotement étant conçu comme un mécanisme plan (16A, 16B) à articulations rotatives à quatre éléments, le châssis d'engin (4) constituant un élément de transmission (104) du mécanisme à articulations rotatives.

2. Fraiseuse automotrice selon la revendication 1,
**caractérisée en ce que** le dispositif de pivotement (16) comprend un premier mécanisme (16A) à articulations rotatives à quatre éléments et un deuxième mécanisme (16B) à articulations rotatives à quatre éléments, les premier et deuxième mécanismes à articulations rotatives étant disposés de manière symétrique par rapport à un plan médian longitudinal du châssis d'engin (4).

3. Fraiseuse automotrice selon la revendication 2,
**caractérisée en ce que** les premier et deuxième mécanismes (16A, 16B) à articulations rotatives à quatre éléments comprennent un premier élément de transmission (101) dont une extrémité est fixée de manière articulée au châssis d'engin (4) par une première articulation (A) et dont l'autre extrémité est reliée de manière articulée à une extrémité d'un deuxième élément de transmission (102) par une deuxième articulation (B), dont l'autre extrémité est reliée de manière articulée à une extrémité d'un troisième élément de transmission (103) par une troisième articulation (C), dont l'autre extrémité est fixée de manière articulée au châssis d'engin (4) par une quatrième articulation (104).

4.   Fraiseuse automotrice selon la revendication 3,

**caractérisée en ce qu'**il est prévu un premier entraînement linéaire (17A) qui comporte un premier ensemble piston/cylindre (18) dont le cylindre (18A) est relié par une extrémité de manière articulée à l'un des éléments de transmission du premier mécanisme (16A) à articulations rotatives à quatre éléments et dont le piston (18B) est fixé par une extrémité de manière articulée au châssis d'engin (4) ou dont le cylindre (18A) est fixé par une extrémité de manière articulée au châssis d'engin (4) et dont le piston (18B) est relié par une extrémité de manière articulée à l'un des éléments de transmission du premier mécanisme à articulations rotatives à quatre éléments, et il est prévu un deuxième entraînement linéaire (17B) qui comporte un deuxième ensemble piston/cylindre (18') dont le cylindre (18A') est relié par une extrémité de manière articulée à l'un des éléments de transmission du deuxième mécanisme (16B) à articulations rotatives à quatre éléments et dont le piston (18B') est fixé par une extrémité de manière articulée au châssis d'engin (4) ou dont le cylindre (18B') est fixé par une extrémité de manière articulée au châssis d'engin (4) et dont le piston (18B') est relié par une extrémité de manière articulée à l'un des éléments de transmission du premier mécanisme à articulations rotatives à quatre éléments.

5.   Fraiseuse automotrice selon la revendication 4,

**caractérisée en ce que** le piston ou le cylindre du premier ensemble piston/cylindre (18) est relié par une extrémité de manière articulée au deuxième élément de transmission (102) du premier mécanisme (16A) à articulations rotatives à quatre éléments, et le piston ou le cylindre du deuxième ensemble piston/cylindre (18') est relié par une extrémité de manière articulée au deuxième élément de transmission (102') du deuxième mécanisme (16B) à articulations rotatives à quatre éléments.

6.   Fraiseuse automotrice selon la revendication 5,

**caractérisée en ce que** le deuxième élément de transmission (102) du premier mécanisme (16A) à articulations rotatives à quatre éléments comporte un appendice (102A) au niveau duquel le piston ou le cylindre du premier ensemble piston/cylindre (18) est relié par une extrémité de manière articulée au deuxième élément de transmission (102) du premier mécanisme (16A) à articulations rotatives à quatre éléments, et **en ce que** le deuxième élément de transmission (102') du deuxième mécanisme (16B) à articulations rotatives à quatre éléments comporte un appendice (102A') au niveau duquel le piston ou le cylindre du deuxième ensemble piston/cylindre (18') est relié par une extrémité de manière articulée au deuxième élément de transmission (102') du deuxième mécanisme (16B) à articulations rotatives à quatre éléments.

7.   Fraiseuse automotrice selon l'une des revendications 3 à 6,
**caractérisée en ce que** le premier élément de transmission (101, 101') des premier et deuxième mécanismes (16A, 16B) à articulations rotatives à quatre éléments est formé par une barre plate, et le deuxième élément de transmission (202, 202') des premier et deuxième mécanismes (16A, 16b) à articulations rotatives à quatre éléments est formé par deux barres plates espacées l'une de l'autre, une extrémité de la barre du premier élément de transmission (201, 201') étant montée de manière rotative entre les extrémités des deux barres du deuxième élément de transmission (202, 202').

8.   Fraiseuse automotrice selon l'une des revendications 3 à 7,
**caractérisée en ce que** le troisième élément de transmission (203, 203') des premier et deuxième mécanismes (16A, 16B) à articulations rotatives à quatre éléments est formé par une console (15) prévue sur la flèche (13), la console (15) étant montée sur le châssis d'engin (4) de manière à pouvoir pivoter autour d'un axe de rotation (X) qui se trouve dans le plan médian longitudinal du châssis d'engin (4).

9.   Fraiseuse automotrice selon l'une des revendications 4 à 8,
**caractérisée en ce que** les premier et deuxième ensembles piston/cylindre (18, 18') forment un angle $\alpha$ qui est compris entre 40° et 80°, de préférence entre 50° et 70°, lorsque la flèche (13) n'est pas pivotée.

10.  Fraiseuse automotrice selon l'une des revendications 3 à 9,
**caractérisée en ce que** les premiers éléments de transmission (101, 101') des premier et deuxième mécanismes (16A, 16B) à articulations rotatives à quatre éléments forment un angle $\alpha$ qui est compris entre 30° et 50°, de préférence entre 20° et 40°, lorsque la flèche (13) n'est pas pivotée, et/ou les deuxièmes éléments de transmission (102, 102') des premier et deuxième mécanismes (16A, 16B) à articulations rotatives à quatre éléments forment un angle $\alpha$ qui est compris entre 70° et 110°, de préférence entre 80° et 100°, lorsque la flèche n'est pas pivotée.

11. Fraiseuse automotrice selon l'une des revendications 3 à 10,
**caractérisée en ce que** les premières articulations (A, A') des premier et deuxième mécanismes (16A, 16B) à articulations rotatives à quatre éléments sont espacées l'une de l'autre dans un plan transversal du châssis d'engin (4) disposé verticalement sur le plan médian longitudinal, et/ou les troisièmes articulations (C, C') des premier et deuxième mécanismes (16A, 16B) à articulations rotatives à quatre éléments forment une articulation commune.

12. Fraiseuse automotrice selon l'une des revendications 4 à 11,
**caractérisée en ce que** la fraiseuse comporte une unité hydraulique (20) pour actionner les premier et deuxième ensembles piston/cylindre (18, 18'), l'unité hydraulique (20) étant conçue de telle sorte que, dans un premier mode de fonctionnement, le piston (18A) du premier ensemble piston/cylindre (18) est déployé et le piston (18A') du deuxième ensemble piston/cylindre (18') est rétracté, de sorte que la flèche (13) est pivotée vers un côté, et que dans un deuxième mode de fonctionnement, le piston (18A) du premier ensemble piston/cylindre (18) est rétracté et le piston (18A') du deuxième ensemble piston/cylindre (18') est déployé, de sorte que la flèche (13) est pivotée vers l'autre côté.

13. Fraiseuse automotrice selon la revendication 12,
**caractérisée en ce qu'**il est prévu une unité de commande (11) coopérant avec l'unité hydraulique (20), qui comporte au moins un élément de commande (11A) qui coopère avec l'unité hydraulique (20) de telle sorte que ledit au moins un élément de commande (11A) occupe une première position pour faire pivoter la flèche (13) dans un sens et une deuxième position pour faire pivoter la flèche (13) dans l'autre sens.

14. Fraiseuse automotrice selon l'une des revendications 1 à 13,
**caractérisée en ce qu'**un convoyeur à bande (35) est prévu sur la flèche (13).

Fig. 1

Fig. 2

Fig. 3

Fig. 4

EP 4 101 982 B1

α = 0°

Fig. 5A

α = 22,5°

15

16

16B

16A

B

B'

E

E'

X, D, D'

101'

101

18A

18A'

17A

17B

18

18'

17A

18B

18B'

A  4A

4

A'

4B

4B'

F

F'

Fig. 5B

$\alpha = 45°$

15

16

16B

B'

E'

E

101'

16A

101

18A

18A'

17A

17B

18

18'

18B

A  4A

4

A'

18B'

4B

4B'

F

F'

Fig. 5C

α = 67,5°

**Fig. 5D**

Fig. 5E

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0131301 A1
- WO 2014029824 A1
- US 5178253 A1